# EUROPÄISCHE PATENTANMELDUNG

(11) **EP 4 311 079 A1**
(43) Veröffentlichungstag der Anmeldung: **24.01.2024**
(21) Anmeldenummer: 22185951.5
(22) Anmeldetag: 20.07.2022
(51) Int. Cl.: H02K 3/22, H02K 11/33, H02K 9/22, H02K 3/12

(54) **ELEKTROMOTOR**

(71) Anmelder: Siemens Aktiengesellschaft, 80333 München (DE)
(72) Erfinder: Brütting, Frank, 91054 Erlangen (DE); Hösle, Markus, 91058 Erlangen (DE); Robinson, Jonathan, 90489 Nürnberg (DE)
(74) Vertreter: Siemens Patent Attorneys

(57) **Zusammenfassung**

Ein Elektromotor mit als Stäbe ausgestalteten Feldleitern im Stator umfasst eine Mehrzahl von Wechselrichtern zur Ansteuerung der Stäbe, wobei die Leistungsteile der Wechselrichter auf einer oder mehreren Leiterplatten angeordnet sind, die Leiterplatten auf wenigstens einer Kühlplatte angeordnet sind und die Kühlplatten direkt an den Stäben oder daran befestigten stabartigen Stromleitern befestigt sind. Die Stäbe weisen innenliegende Kühlkanäle oder Wärmerohre auf, um Wärme zu abzutransportieren, dass die Stäbe im Bereich der Kühlplatten entwärmt werden.

## Beschreibung

Die Erfindung betrifft einen Elektromotor mit statorseitig als Stab ausgeführten Feldleitern.

Elektromotoren können so gestaltet sein, dass der Ständer (Stator) eine Reihe von Stäben anstelle von gewickelten Drahtleitern als Feldleiter aufweist. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Dieser hohe Stromfluss erfordert aber durch die geringe Induktivität der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehr Platinen angeordnet werden, die nahe am Elektromotor angeordnet werden. Die Stäbe können dabei direkt oder über elektrisch leitende stabartige Verbindungselemente direkt als mechanischer Träger der Platinen verwendet werden.

Zu der hohen Verlustwärme der elektrischen und elektronischen Komponenten, die durch die hohen Stromstärken bedingt ist, kommt also bei einem solchermaßen gestalteten Elektromotor eine hohe Packungsdichte der elektrischen und elektronischen Komponenten. Deren direkte Verbindung mit dem Stator/Rotor-Block über die Stäbe sorgt für einen weiteren Wärmeeintrag aus dem Stator/Rotor-Block. Daraus resultiert nachteilig ein erheblicher Kühlaufwand der elektrischen und elektronischen Komponenten auf den Platinen.

Es ist Aufgabe der Erfindung, einen Elektromotor anzugeben, der den eingangs genannten Nachteil vermindert.

Diese Aufgabe wird durch einen Elektromotor mit den in Anspruch 1 angegebenen Merkmalen gelöst.

Der erfindungsgemäße Elektromotor umfasst einen Stator mit einer Mehrzahl von als Stab ausgestalteten Feldleitern und einen Wechselrichter mit einem oder mehreren parallelen Leistungsteilen für jeden der Feldleiter zu deren Ansteuerung, wobei der Wechselrichter eine Steuerung zur Erzeugung von Ansteuersignalen für die Leistungsteile umfasst.

Dabei sind die Endstufen des Wechselrichters auf einer Mehrzahl von Leiterplatten angeordnet und die Leiterplatten auf wenigstens einer Kühlplatte angeordnet, wobei die Kühlplatte so angeordnet ist, dass die Feldleiter oder an den Feldleitern angeordnete sie axial verlängernde Stromleiter mit der Kühlplatte in mechanischer Wirkverbindung stehen.

Schließlich ist wenigstens eine Kühlvorrichtung vorhanden, die eine Fluidleitung umfasst, die wenigstens abschnittsweise innerhalb von einem der Feldleiter und/oder Stromleiter geführt ist.

Der erfindungsgemäße Elektromotor weist vorteilhaft durch die Kühlvorrichtung eine verbesserte Wärmeabfuhr für die Feldleiter auf. Dadurch erreicht ein geringerer Wärmestrom die Kühlplatten und die auf den Kühlplatten angeordnete Elektronik, insbesondere die Wechselrichter. Dadurch wiederum kann der Kühlaufwand im Bereich der Kühlplatten und der Elektronik reduziert werden.

Die Feldleiter oder Stromleiter agieren bevorzugt als mechanischer Träger für die Kühlplatten und stehen daher in mechanischer Wirkverbindung mit diesen. Es ist möglich, dass die Feldleiter oder Stromleiter die Kühlplatte und die Leiterplatte durchdringen.

Vorteilhafte Ausgestaltungen des erfindungsgemäßen Elektromotors gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:
Die Fluidleitungen können Wasserleitungen sein. Wasser ist ein Standard-Kühlmittel und kann beispielsweise in einem Werk von außerhalb des Elektromotors zur Verfügung gestellt werden, sodass für Wasser geeignete Leitungen zweckmäßig sind.

Der Elektromotor kann ausgestaltet sein, ein elektrisch leitendes Fluid als Kühlmittel zu verwenden, wobei die spezifische Leitfähigkeit wenigstens 10⁻² S/m, insbesondere wenigstens 1 S/m beträgt. Ist das Kühlfluid elektrisch leitend, wird dadurch in der Fluidleitung ein weiterer Strompfad bereitgestellt, der ansonsten nicht bereitsteht. Dadurch wird für einen gegebenen Stromfluss durch den Feldleiter oder Stromleiter der Querschnitt an metallischem Leiter, beispielsweise Kupfer, der für den Strom bereitgestellt werden muss, reduziert und somit Material und Gewicht gespart.

Der Elektromotor kann ausgestaltet sein, Luft als Kühlfluid zu verwenden. Gegenüber anderen Medien weist Luft den Vorteil auf, geringe bauliche Anforderungen aufzuweisen, da Luft nicht eingeschlossen und gegenüber den zu kühlenden Aufbauten abgeschlossen zu werden. Vielmehr kann Luft in offenen Kühlkanälen geführt werden und steht frei zur Verfügung.

Der Elektromotor kann eine Pumpe für ein Kühlfluid aufweisen. Sofern das Kühlfluid nicht von außen zugeführt wird, ist es vorteilhaft, wenn der Elektromotor so ausgestaltet ist, dass ein Fluid-Umlauf erzeugt werden kann, der für einen Wärmeabtransport durch Materialbewegung sorgt. Falls der Motor eine hohe Zahl von Feldleitern, beispielsweise mehr als 50 oder sogar mehr als 100 Feldleiter aufweisen, können auch mehrere Pumpen vorhanden sein.

Der Elektromotor kann so gestaltet sein, dass für jeden der Feldleiter und/oder Stromleiter eine Fluidleitung vorhanden ist und wenigstens abschnittsweise innerhalb des Feldleiters und/oder Stromleiters geführt ist. Es ist zweckmäßig, für jeden der Feldleiter oder Stromleiter eine Entwärmung vorzusehen, da im Betrieb des Elektromotors die Feldleiter oder Stromleiter gleichmäßig mit Wärme beaufschlagt werden und somit jeder der Feldleiter oder Stromleiter in etwa gleichermaßen zum Wärmetransport zu den Kühlplatten beiträgt.

Zweckmäßig liegt ein Bereich, in dem die Fluidleitung in dem Feldleiter und/oder Stromleiter geführt ist, axial zwischen einer Kühlplatte und einem axialen Beginn des Rotors. Weiterhin ist es zweckmäßig, in diesem Bereich die Wärme abzuführen, um den Wärmeeintrag aus dem Rotor-Bereich, also dem Antriebssystem in die Elektronik, also dem Bereich der Kühlplatten und Leiterplatten zu verringern.

Falls Stromleiter vorhanden sind, sind diese mit den Feldleitern zweckmäßig mittels eines Schuhs verbunden, wobei die Fluidleitung auch im Schuh geführt sein kann. Der Schuh dient der festen Verbindung zwischen den Feldleitern und den Stromleitern, wobei die Feldleiter zur Antriebsseite des Elektromotors gehören und die Stromleiter die Elektronik auf den Leiterplatten kontaktieren und die Kühlplatten und Leiterplatten tragen.

Der Elektromotor kann einen Kurzschlussring zur elektrischen Verbindung der Feldleiter aufweisen. Die Fluidleitungen für wenigstens zwei der Feldleiter können im Kurzschlussring miteinander verbunden sein. Hierdurch wird vorteilhaft auf einer Seite des Elektromotors ein serieller Zusammenschluss der Fluidleitungen vorgenommen werden, so dass Zufluss und Abfluss auf einer Seite des Elektromotors liegen. Es ist zweckmäßig, die Fluidleitungen im Kurzschlussring paarweise zusammenzuschließen.

Sind die Fluidleitungen auf der Stirnseite des Elektromotors im Kurzschlussring paarweise zusammengeschlossen, dann kann es vorteilhaft sein, auch auf der Rückseite des Elektromotors einen Zusammenschluss von einem Teil der Fluidleitungen vorzunehmen. Zweckmäßig werden die Fluidleitungen in Blöcken von wenigstens zwei Fluidleitungen dabei so zusammengeschlossen, dass sich ein mäanderförmiger Verlauf der sich ergebenden verbundenen Fluidleitungen durch den Stator ergibt. Hierdurch wird die Anzahl der Zuflüsse und Abflüsse reduziert und somit der Aufbau des Elektromotors vereinfacht. Im Prinzip kann die Anzahl der Zuflüsse und Abflüsse auf jeweils eins reduziert werden, indem alle Fluidleitungen seriell verbunden werden. In bestimmten Ausgestaltungen des Motors kann es zweckmäßig sein, mehr als je einen Abfluss und Zufluss zu verwenden, also die Fluidleitungen nur blockweise seriell zu verbinden.

Es ist möglich, dass zusammengeschlossene Fluidleitungen voneinander derart beabstandet sind, dass sie nicht zu benachbarten Leiterstäben gehören. Beispielsweise kann die Fluidleitung jedes n-ten Leiterstabs seriell zusammengeschlossen sein, wobei n wenigstens zwei beträgt. Im Falle von n = 2 ist also eine Fluidleitung eines ersten Leiterstabs mit derjenigen eines übernächsten (dritten) Leiterstabs verbunden. Es können dann beispielsweise n voneinander separate Fluidkanal-Pfade aus zusammengeschlossenen Fluidleitungen vorliegen. Vorteilhaft wird dadurch erreicht, dass bei Ausfall eines der Fluidkanal-Pfade der Mangel an Kühlung nicht einen zusammenhängenden Block von Leiterstäben betrifft, sondern sich gleichmäßig über den Umfang des Elektromotors verteilt.

Die Fluidleitung kann wenigstens teilweise durch eine Aushöhlung oder Bohrung im Feldleiter und/oder Stromleitung gebildet sein. Die Fluidleitung weist dann im Prinzip kein eigenes Material auf, da sie kein eigenes Bauteil ist. Alternativ kann die Fluidleitung ein eigenes Bauteil darstellen. In diesem Fall kann die Fluidleitung ein metallisches Material aufweisen, insbesondere metallisch sein. Dadurch steht die Fluidleitung vorteilhaft selbst und auch möglicherweise das Kühlfluid als elektrischer Leiter zur Verfügung.

Die Fluidleitung kann auch ein keramisches Material aufweisen, insbesondere aus einem keramischen Material bestehen. Keramische Materialien sind hitzebeständig, chemisch beständig und elektrisch isolierend und dadurch in bestimmten Ausgestaltungen des Elektromotors vorteilhaft.

Die Fluidleitung kann ein Wärmerohr oder Thermosiphon sein. Sie ist dann bevorzugt vollständig innerhalb eines der Feldleiter und/oder Stromleiter angeordnet. Durch die enorm hohe Wärmeleitfähigkeit eines Wärmerohrs wird eine starke Entwärmung des Feldleiters oder Stromleiters im Bereich der Verdampferseite des Wärmerohrs erreicht. Die Verdampferseite des Wärmerohrs ist bevorzugt im Bereich der Kühlplatten und Leiterplatten angeordnet oder zwischen diesen und dem Stator/Rotor-Block. Dadurch wird vor allem verhindert oder vermindert, dass Abwärme aus dem Stator/Rotor-Block über die Feldleiter die Kühlplatten und Leiterplatten zusätzlich erwärmt. Die Kondensatorseite der Wärmerohre kann einerseits abseits des Stator/Rotor-Blocks und jenseits der Kühlplatten angeordnet sein. Alternativ kann das Kondensatorende auch im Bereich eines Kurzschlussrings des Elektromotors angeordnet sein. Dabei kann das Wärmerohr auch bis in den Kurzschlussring hineinragen.

Im Bereich des Kondensatorendes des Wärmerohrs ist es zweckmäßig, wenn eine gute Wärmeabfuhr ermöglicht ist, indem beispielsweise Kühl-Lamellen vorhanden sind. Befindet sich das Kondensatorende des Wärmerohrs im Bereich des Kurzschlussrings, dann kann der Kurzschlussring beispielsweise geblecht aufgebaut sein, wobei die Einzelbleche beabstandet sein können. Hierdurch weist der Kurzschlussring eine hohe Oberfläche auf und ermöglicht so eine effiziente Wärmeabfuhr. Diese kann unterstützt werden durch eine forcierte Luftbewegung, beispielsweise durch einen Eigen- oder Fremdlüfter.

Der Elektromotor kann eine Mehrzahl von Leiterplatten aufweisen. Insbesondere kann eine Mehrzahl von separaten Leiterplatten auf eine Kühlplatte aufgebracht sein. Durch Verteilung auf eine Mehrzahl von Leiterplatten kann die verwendete Leistungselektronik modularisiert werden. So kann unter Verwendung einer Vielzahl von gleichartigen Leiterplatten eine große Anzahl von Umrichtern bereitgestellt werden, wodurch die Herstellung in Bezug auf Ausschuss verbessert wird.

Die Leiterplatten können kreis- oder ringsektorförmig ausgestaltet sein. Die Leiterplatten können dadurch in einem Kreis oder Ring angeordnet werden, der die Achse des Elektromotors umschließt. Leiterplatten mit dieser Form lassen sich zu einem Kreis oder Ring zusammensetzen und somit optimal an die Form der elektrischen Maschine angepasst an einem axialen Ende der Maschine anordnen, wobei gleichzeitig eine hohe Modularität erreicht wird. Die Leiterplatten können dadurch platzsparend axial versetzt zum Stator und Rotor angeordnet werden und bilden einen integralen Teil des Elektromotors. Auf diese Weise ist es auch möglich, mehrere Kühlplatten mit Leiterplatten axial versetzt zueinander anzuordnen und so beispielsweise Wechselrichter parallelschalten, die an derselben azimutalen Stelle angeordnet sind.

Bevorzugt ist die Kühlplatte senkrecht zur Achse des Elektromotors angeordnet. Auf diese Weise kann die Kühlplatte mit den Leiterplatten platzsparend an einem axialen Ende der elektrischen Maschine angeordnet werden. Auch eine Mehrzahl von Kühlplatten kann axial versetzt und nahe aneinander angeordnet werden. Weiterhin ist bei einer solche Anordnung ein gleichmäßiger Abstand zwischen Kühlplatte und Leistungselektronik zu den Stäben gegeben, die die Feldleiter bilden, wodurch die Kontaktierung der Stäbe vereinfacht wird.

Besonders vorteilhaft ist es, wenn jeder der Feldleiter mit einer eigenen Phase angesteuert wird. Unter einer Phase wird dabei eine Wechselspannungsversorgung verstanden, die gegenüber allen anderen im Elektromotor verwendeten Phasen um einen von Null verschiedenen Winkel phasenversetzt ist. In diesem Fall ist für jeden der Feldleiter zweckmäßig ein eigener Wechselrichter vorhanden, der nur diesen Feldleiter ansteuert.

Die Wechselrichter können ausgestaltet sein zur Erzeugung einer Wechselspannung mit einer Amplitude von 200 V oder weniger, insbesondere 150 V oder weniger, insbesondere 50 V oder weniger. Die so erzeugte Spannung ist die Spannung, mit der die Feldleiter, also die Statorstäbe beaufschlagt werden. Durch diese vergleichsweise niedrige Spannung wird erst ermöglicht, dass die Komponenten der Wechselrichter sehr nahe zueinander angeordnet werden können. Es können Abstände von etwa 2 mm zwischen den Komponenten wie den LeistungsHalbleiter-Schaltern verwendet werden, wodurch sich eine hohe Packungsdichte der elektronischen Komponenten ergibt und die Möglichkeit, auf vergleichsweise geringem Raum eine Vielzahl von Wechselrichtern anzuordnen. Dadurch wiederum wird es bei geringem Platzbedarf möglich, eine hohe Zahl von Phasen zu verwenden, insbesondere eine Anzahl von Phasen, die der Zahl der Statorstäbe entspricht. So können bei einer entsprechend hohen Zahl von Statorstäben 48, 72 oder auch 120 Phasen verwendet werden.

Die Begriffe "axial", "radial", "azimutal" beziehen sich dabei auf die Achse des Rotors und damit auf die entsprechende Symmetrieachse des Stators. Dabei beschreibt "axial" eine Richtung parallel zu dieser Achse, "radial" beschreibt eine Richtung orthogonal zur Achse, auf diese zu oder auch von ihr weg, und "azimutal" ist eine Richtung, die in konstantem radialem Abstand zur Achse und bei konstanter Axialposition kreisförmig um die Achse herum gerichtet ist.

Werden die Begriffe "axial", "radial" und "tangential" in Bezug auf eine Fläche verwendet, bspw. eine Querschnittsfläche, beschreiben die Begriffe die Orientierung des Normalenvektors der Fläche, d.h. desjenigen Vektors, der senkrecht auf der betroffenen Fläche steht.

Vorteilhaft kann der Elektromotor in solchen Anwendungen eingesetzt werden, bei denen eine hohe und über einen weiten Drehmomentenbereich und Leistungsbereich regelbare Leistung von 10 kW oder mehr, insbesondere 100 kW oder mehr, in speziellen Ausgestaltungen 1 MW oder mehr gebraucht wird. Vorteilhaft ist der Elektromotor weiterhin dort, wo ein kompakter Aufbau erforderlich ist. Beispiele für vorteilhafte Anwendungsgebiete sind Schiffsantriebe von kleinen Booten bis zu großen Schiffen, Kraftfahrzeuge, Pumpen, Lüfter, Zentrifugen im industriellen Bereich; Verkehr und Nahrungsmittelindustrie.

Im Folgenden wird die Erfindung anhand der in den Figuren dargestellten Ausführungsbeispiele näher beschrieben und erläutert. Es zeigen schematisch:
- Figur 1: einen Elektromotor mit auf von Kühlplatten getragenen Leiterplatten angeordneten Leistungsteilen in Schrägansicht,
- Figur 2: auf einer Kühlplatte angeordnete Platinen in Frontansicht,
- Figur 3: einen Ausschnitt des Elektromotors in Schrägansicht mit Kühlplatten mit Leiterplatten,
- Figur 4: ein Schnittbild eines Leiterstabs mit aufgeschobener Kühlplatte und mit Fluidkanal und Schlauchanschluss,
- Figur 5: ein Schnittbild eines Leiterstabs mit drei aufgeschobenen Kühlplatten und mit Fluidkanal und Schlauchanschluss,
- Figur 6: die Führung von Fluidkanälen auf Vorder- und Rückseite des Elektromotors,
- Figur 7: ein Schnittbild des Elektromotors mit Wärmerohren als Fluidkanäle,
- Figur 8: ein Ausschnitt der Stirnseite des Elektromotors mit einem geblechten Kurzschlussring.

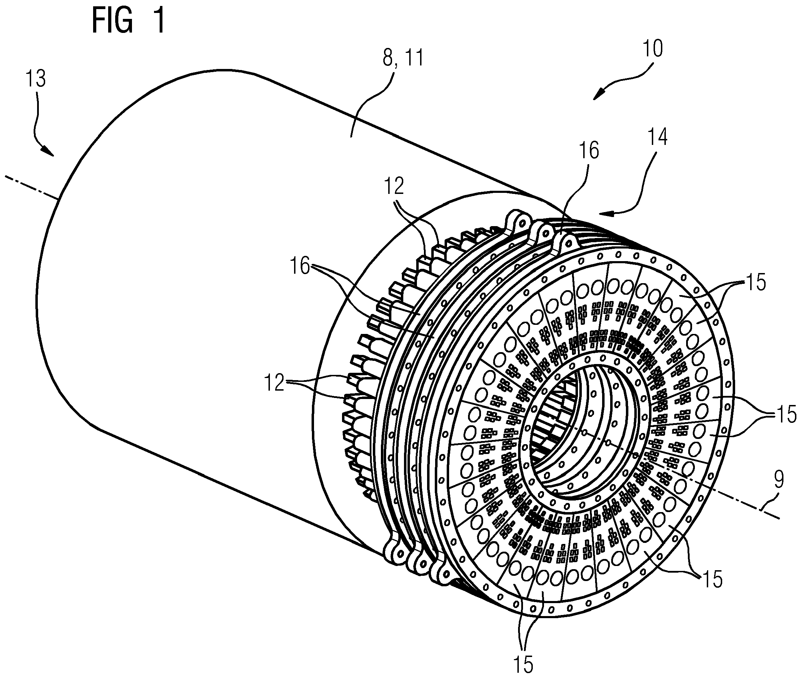

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem dem bestromten Stator 11 wird der Rotor um eine Achse 9 in Drehung versetzt. Der Rotor ist dabei vom Stator 11 durch einen Luftspalt getrennt. In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring 38 miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule zusammen mit anderen Komponenten der Elektronik (Gleichspannungswandler, Gleichrichter) verhältnismäßig eng zusammen auf Leiterplatten 15 angeordnet sein. Die Leiterplatten 15 sind dabei in diesem Beispiel ringsektorförmig und viele einzelne Leiterplatten 15 bilden zusammen eine ringförmige Platinenstruktur aus.

Während in den Beispielen davon ausgegangen wird, dass die Leiterplatten 15 zumindest die Leistungsteile von Wechselrichtern tragen, ist es auch möglich, dass ein Teil der Leiterplatten 15 Gleichrichter und DC/DC-Wandler tragen.

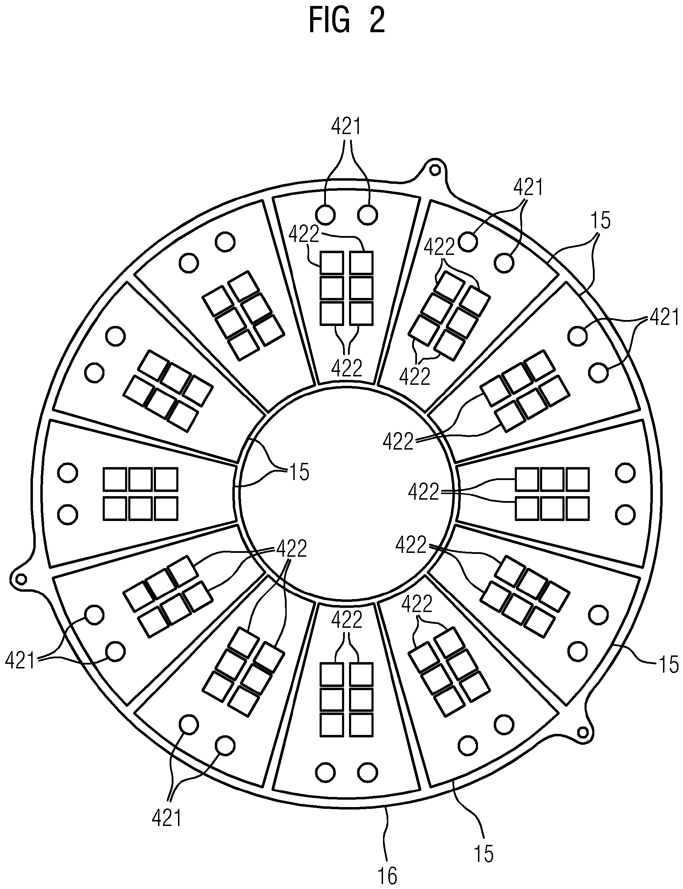

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Leiterplatten 15 hängt von der konkreten Ausgestaltung des Elektromotors 10 ab, insbesondere der Anzahl der Leiterstäbe 12. Jede der Leiterplatten 15 umfasst mehrere Halbleiterschalter 422. Die Halbleiterschalter 422 bilden zusammen Leistungsteile von Wechselrichtern aus, die eine Wechselspannung für die Leiterstäbe 12 bereitstellen.

Weiterhin kann ein Teil der Leiterplatten 15 oder alle Leiterplatten 15 in den Figuren nicht dargestellte Treiberschaltungen und andere elektronische Komponenten wie Kondensatoren umfassen. Die Halbleiterschalter 422 sind Leistungshalbleiter wie beispielsweise IGBTs, MOSFETs oder JFETs und können abhängig von der Verschaltung zusätzlich nicht gezeigte Dioden umfassen. Die Halbleiterschalter 422 sind beispielsweise als Halbbrücken verschaltet. Ein nicht gezeigter Kondensator kann beispielsweise einen Zwischenkreis-Kondensator der Halbbrücken darstellen. Die Halbleiterschalter 422 einer Leiterplatte 15 können dabei einer einzelnen Phase zugeordnet sein. Bei einem Elektromotor 10 mit einer großen Zahl an Feldleitern 12 und einer entsprechenden Zahl an Phasen ist es vorteilhaft, wenn eine Leiterplatte 15 die Leistungsteile für mehrere Phasen trägt.

Die Leiterplatten 15 umfassen weiterhin Kontaktstellen 421, an denen die Leiterstäbe 12 angeschlossen sind. Die Leiterplatten 15 werden von scheibenförmigen Kühlplatten 16 getragen, wobei für eine bessere Platzausnutzung die Kühlplatten 16 beidseitig mit Leiterplatten 15 belegt sein können.

Da bei dem Elektromotor 10 verhältnismäßig hohe Ströme in den Leiterstäben nötig sind, sind bevorzugt mehrere Leistungsteile zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Leiterplatten 15 gleichartig an den Kontaktstellen durchdringen oder im Falle der äußersten Kühlplatte 16 zumindest kontaktieren.

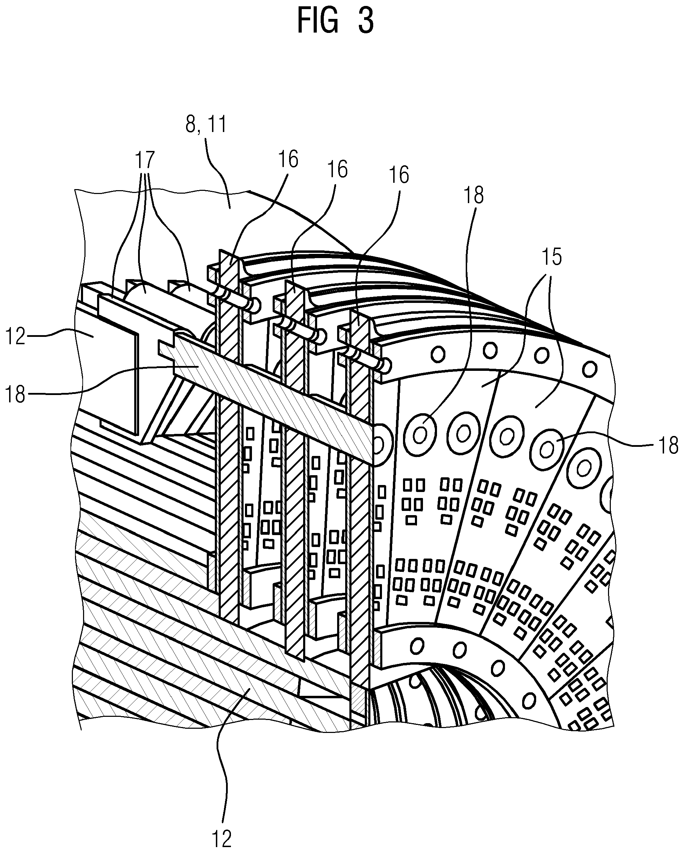

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Schuhe 17 mit den Leiterstäben 12 verbunden. Die Endstufen, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit. Bei dem in Figur 3 gezeigten Aufbau ist erkennbar, dass zwei der Verbindungselemente 18 jeweils eine Leiterplatte 15 durchlaufen. Somit trägt jeder der Platinen die Endstufen für zwei Phasen des Elektromotors 10. In anderen Varianten für den Elektromotor 10 kann eine einzelne Leiterplatte 15 auch nur eine Phase oder drei oder mehr Phasen tragen, wobei dieselbe Anzahl der Verbindungselemente 18 die Leiterplatte 15 durchläuft.

Der Stator/Rotor-Block 8 des Elektromotors 10 und die Elektronik auf den Leiterplatten 15 erzeugen Wärme. Die Leiterstäbe 12 und die Verbindungselemente 18 stellen neben der elektrischen Leitung auch eine Wärmebrücke zwischen den beiden Komponenten dar. Besonders auf der Seite der Elektronik ist es aber wichtig, dass ein nicht zu großer zusätzlicher Wärmeeintrag passiert, da die elektronischen Bauelemente eine Temperatur von ca. 80°C nicht lange und weit überschreiten dürfen. Eine verstärkte Kühlung im Bereich der Leiterplatten ist aber aufwendig.

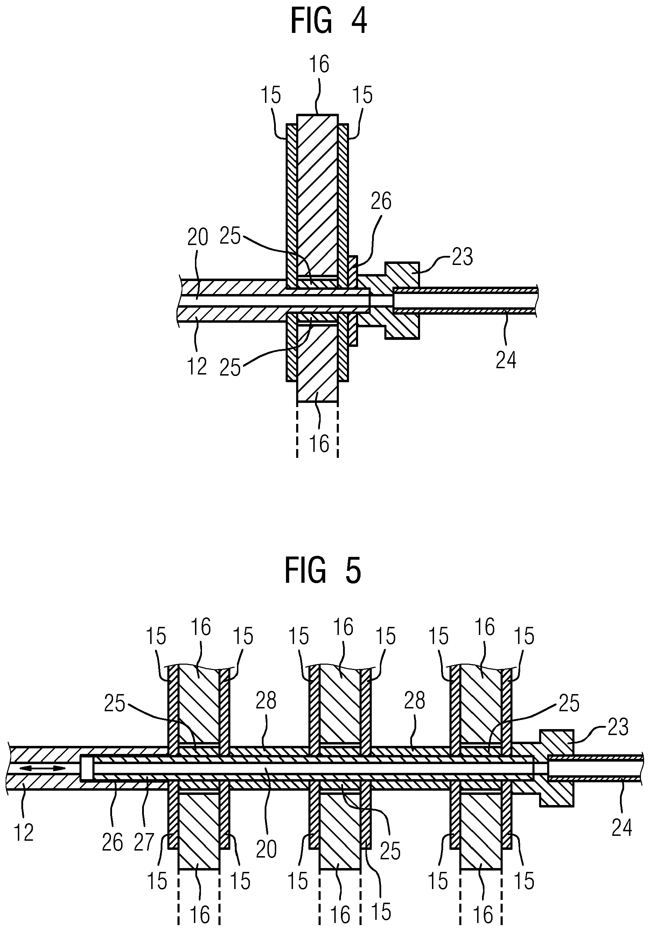

Figur 4 zeigt ein Schnittbild eines Ausschnitts des Elektromotors 10. Das Schnittbild zeigt zwei Leiterplatten 15, die beidseitig auf einer Kühlplatte 16 angeordnet sind. Die Anordnung in Figur 4 entspricht derjenigen der Figuren 1 bis 3. Von der Ringstruktur, die die Leiterplatten 15 bilden, erfasst das Schnittbild der Figur 4 daher nur zwei der Leiterplatten 15. Die Kühlplatte 16 ist auf einen Leiterstab 12 aufgeschoben und wird von den Leiterstäben 12 getragen. Für das Aufschieben auf den Leiterstab 12 ist dieser zum Ende hin verjüngt. Eine metallische Hülse 25 stellt im Bereich der Verjüngung einen vergrößerten Leiterquerschnitt zwischen den Leiterplatten 15, also der Vorderseite und Rückseite der Kühlplatte 16, her. Die Kühlplatte und die Leiterplatten 15 können beispielsweise mittels einer Mutter 26 fixiert sein. Hierzu ist es zweckmäßig, wenn der Leiterstab 12 ein Außengewinde im Endbereich aufweist.

Die Leiterstäbe 12 umfassen jeweils einen Fluidkanal 20, beispielsweise als Bohrung. Der Fluidkanal 20 ist durchgängig und endet am äußeren Ende des Leiterstabs 12. Dort kann ein Schlauchanschluss 23 aufgebracht sein, der eine Verbindung zu einem Schlauch 24 herstellt. Schlauch 24 und Fluidkanal 20 erlauben es, die Leiterstäbe 12 mit einem Kühlfluid, beispielsweise Luft oder Wasser zu durchströmen und damit Wärme abzutransportieren. Dabei ist es möglich, den Fluidkanal 20 an anderer Stelle aus dem Leiterstab 12 herauszuführen, um einen zweiten Anschluss, also Abfluss, zu realisieren.

Der in Figur 4 gezeigt Aufbau kann erweitert werden, um mehr als eine Kühlplatte 16 anzuschließen. Ein entsprechender Aufbau ist in Figur 5 gezeigt. Das Ende des Leiterstabs 12 weist in dieser Ausführung zum Ende hin eine Aussparung 26 auf, die in diesem Beispiel gegenüber dem Fluidkanal 20 einen erweiterten Durchmesser hat. Die Aussparung 26 ist mit einem Innengewinde versehen. In die Aussparung 26 eingeschraubt ist ein Gewindestab 27. Der Gewindestab 27 weist seinerseits einen Fluidkanal 20 auf, der im eingeschraubten Zustand den Fluidkanal 20 des Leiterstabs 12 fortsetzt.

Auf den Gewindestab 27 aufgeschoben ist dann in dem Beispiel der Figur 5 eine Folge von drei Kühlplatten 16 mit den jeweiligen Leiterplatten 15. Um Stromleitung um die richtigen Abstände zwischen den Leiterplatten 15 unter dem für die Kontaktierung nötigen Andruck und auch elektrische Leitung zu gewährleisten, sind Hülsen 25, 28 eingeschoben. Am Ende der Gewindestange 27 ist wie in der Ausführung gemäß Figur 4 ein Schlauchanschluss 23 angeordnet, der den Fluidkanal 20 mit einem Schlauch 24 verbindet.

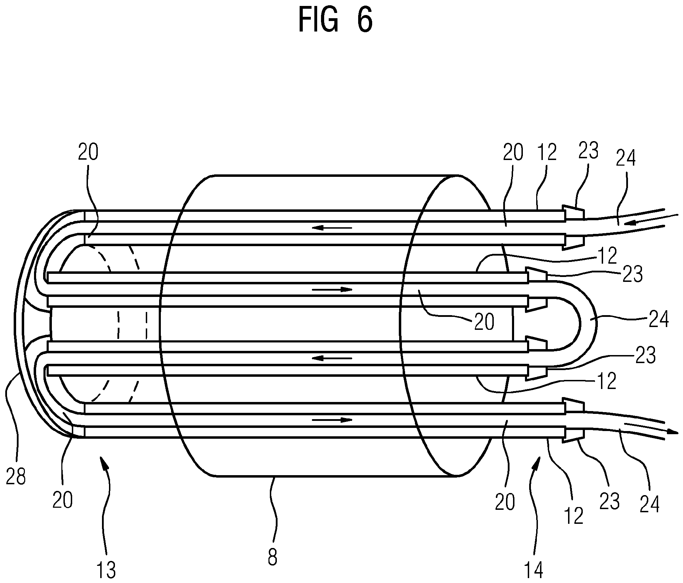

Eine vorteilhafte Ausgestaltung, um einen Rückkanal für den Fluss des Kühlfluids zu realisieren, ist in Figur 6 dargestellt. Figur 6 zeigt stark vereinfacht und unter Auslassung der Kühlplatten 16 und Leiterplatten 15 den Elektromotor 10 mit dem von den Leiterstäben 12 des Stators 11 durchdrungenen Stator/Rotor-Block 8. Die Leiterstäbe 12 münden an einem Ende in einen sie verbindenden Kurzschlussring 38. Der Kurzschlussring 38 ist dabei so ausgestaltet, dass er seinerseits Fluidkanäle 20 aufweist, die so gestaltet sind, dass jeder davon die Fluidkanäle 20 von zwei - im einfachsten Fall benachbarten - Leiterstäben 12 miteinander verbindet. Auf diese Weise wird ein Fluss realisiert, bei dem ein erster Leiterstab 12 einen Zufluss darstellt, in den also das Kühlfluid auf der Rückseite 14 des Elektromotors 10 eintritt und ein dazu benachbarter Leiterstab 12 den Abfluss darstellt, bei dem ebenfalls auf der Rückseite des Elektromotors 10 das Kühlfluid austritt. Die Schläuche 23 an Zufluss und Abfluss können an anderer Stelle zusammengeführt sein, um einen Kühlkreislauf zu realisieren. An dieser Stelle kann die Wärme über einen Wärmetauscher oder Kühlkörper an die Umgebung abgegeben werden. Es ist möglich, dass die genannten Elemente als Teil des Elektromotors 10 ausgeführt sind. Alternativ ist es auch möglich, dass der Kühlkreislauf am Einbauort des Elektromotors 10 unabhängig vom Elektromotor 10 bereits vorhanden ist und der Elektromotor 10 zusammen mit anderen Geräten an diesen angeschlossen wird.

Da alle Leiterstäbe 12 gleichermaßen erwärmt werden von der Seite des Stator/Rotor-Blocks 8 und gleichermaßen mit den Leiterplatten 15 verbunden sind, ist es zweckmäßig, für jeden der Leiterstäbe 12 einen Fluidkanal 20 vorzusehen. Bei bestimmten Ausgestaltungen des Elektromotors 10 ist die Anzahl der Leiterstäbe 12 aber hoch, beispielsweise 48, 72 oder sogar 120. Im letzteren Fall liegen somit 60 Abflüsse und 60 Zuflüsse vor, die an anderer Stelle angeschlossen oder zusammengeführt werden müssen und für ein Wasserfluss erreicht werden muss, beispielsweise durch ein Pumpsystem. Daher ist es für bestimmte Ausführungsformen des Elektromotors 10 vorteilhaft, wie in Figur 6 angedeutet die Fluidkanäle auch auf der Rückseite 14 teilweise miteinander zu verbinden. Hierzu wird der angeschlossene Schlauch 24 direkt zu einem weiteren Leiterstab 12 geführt und dort ebenfalls angeschlossen. Hierbei ist es zweckmäßig, andere Paare von Leiterstäben zu verbinden als es im Kurzschlussring 38 der Fall ist, um eine mäandernde Führung des Kühlfluids zu erreichen. So kann das Kühlfluid mit einem einzigen Zufluss und einem einzigen Abfluss durch 4, 6, 8 oder mehr der Leiterstäbe 12 geleitet werden, wodurch der Aufbau vereinfacht wird. Es können so je nach Bedarf der Kühlung auch alle Leiterstäbe zu einem einzigen Kühlfluid-Pfad zusammengeschlossen werden oder aber die Hälfte, ein Drittel oder eine Aufteilung in andere beliebige Bruchteile.

Besonders vorteilhaft ist es, wenn ein Kühlfluid-Pfad, der durch mehrere in Serie geschaltete Fluidkanäle gebildet ist, die Fluidkanäle von solchen Leiterstäben umfasst, die durch einen, zwei oder mehr zwischenliegende Leiterstäbe in der azimutalen Abfolge getrennt sind. Sind die Leiterstäbe fortlaufend azimutal nummeriert, dann kann beispielsweise ein erster Kühlfluid-Pfad die Fluidkanäle der Leiterstäbe 1, 5, 9, 13, 17... umfassen, während ein zweiter Kühlfluid-Pfad die Fluidkanäle der Leiterstäbe 2, 6, 10, 14, 18..., ein dritter Kühlfluid-Pfad diejenigen der Leiterstäbe 3, 7, 11, 15, 19... und ein vierter Kühlfluid-Pfad diejenigen der Leiterstäbe 4, 8, 12, 16, 20... umfassen. Mit diesen vier Kühlfluid-Pfaden sind alle Fluidkanäle Teil eines Kühlfluid-Pfads. Die Kühlfluid-Pfade sind mit anderen Worten verflochten. Fällt ein solcher Kühlfluid-Pfad durch technischen Defekt aus, ist davon aber nicht ein zusammenhängender Block von Leiterstäben betroffen, sondern der Mangel an Kühlung ist vorteilhaft gleichmäßig über die Leiterstäbe verteilt. Die Symmetrie der Kühlung bleibt dadurch gewahrt.

In den bisher beschriebenen Beispielen sind die Fluidkanäle stets als Bohrungen, oder Höhlungen in den jeweiligen Elementen ausgestaltet. Es ist alternativ auch möglich, die Fluidkanäle als eigene Bauelemente zu formen und beispielsweise in die Leiterstäbe einzubringen. Solche Fluidkanäle stellen damit eigene Bauelemente dar. Sie können beispielsweise keramisch sein, wodurch eine elektrische Isolation zum Leiterstab 12 möglich ist. In alternativen Ausgestaltungen kann der Fluidkanal auch aus anderen Materialien gefertigt sein, auch beispielsweise metallische Materialien. In diesem Fall ist eine elektrische Leitung von dem Leiterstab 12 zu anderen Elementen zu verhindern, beispielsweise durch die Verwendung von Kunststoff-Schläuchen zur Wasserführung.

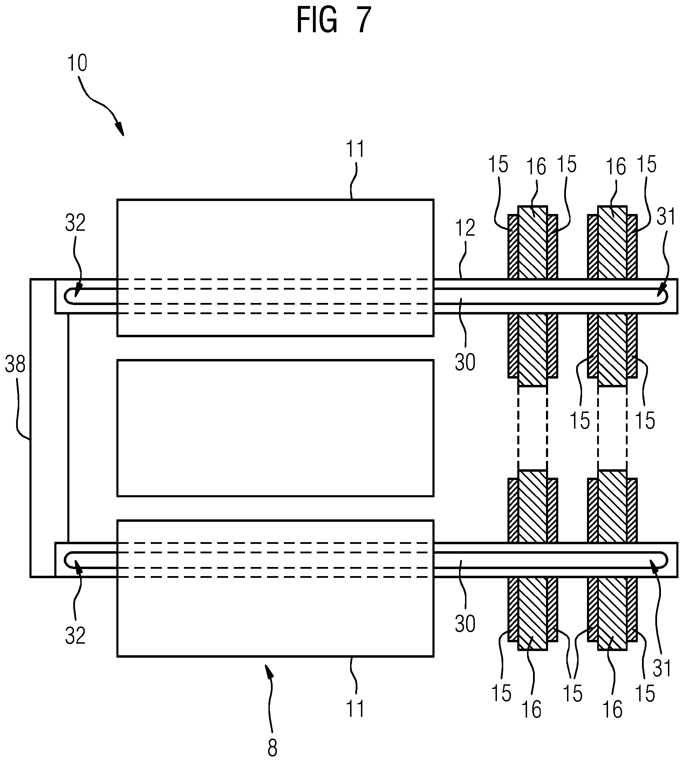

Alternativ zu offenen Fluidkanälen 20, die von einem Kühlfluid in einer Richtung durchflossen werden, können die Fluidkanäle 20 innerhalb der Leiterstäbe 12 auch abgeschlossen sein und als Wärmerohre 30 gestaltet sein. Eine solche Ausgestaltung ist in Figur 7 dargestellt. Figur 7 zeigt den Elektromotor 10 in Seitenansicht mit dem Stator/Rotor-Block 8 und den Leiterstäben 12. Weiterhin sind an den Leiterstäben 12 auf der Rückseite 14 des Elektromotors zwei Kühlpatten 16 mit beidseitig aufgebrachten Leiterplatten angeordnet.

Die Wärmerohre 30, 31 durchlaufen im Wesentlichen die gesamte Länge der Leiterstäbe. Sie sind dabei so angeordnet, dass ihre verdampferseitigen Enden 31 im Bereich zwischen dem Stator/Rotor-Block 8 bis zu der oder den Kühlplatten 16 liegen. Dadurch wird die Wärme hauptsächlich aus diesem Bereich abtransportiert, d.h. die Abwärme der Endstufen des Wechselrichters wird abgeführt und Abwärme aus dem Stator/Rotor-Block 8 wird daran gehindert, zur Erwärmung der Endstufen auf den Leiterplatten 15 beizutragen. Bei den Wärmerohren 30 kann es sich beispielsweise um Kupfer-Wasser-Wärmerohre handeln.

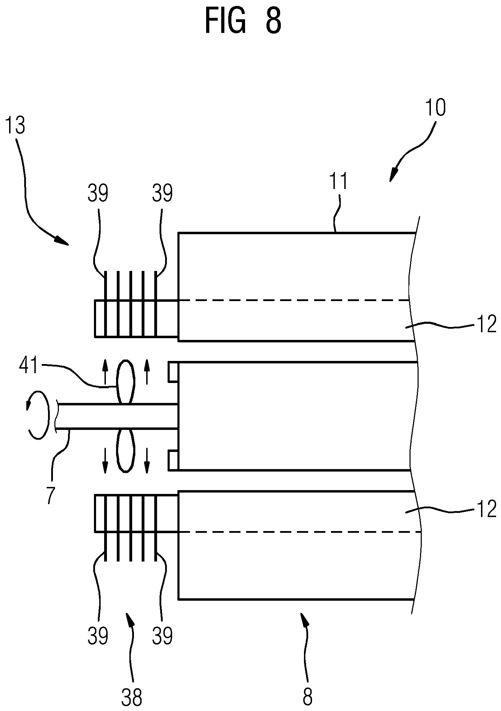

Das kondensatorseitige Ende 32 der Wärmerohre 30 kann einerseits auf der Rückseite 14 des Elektromotors 10 an einem vom Stator/Rotor-Block 8 abgewandten Ende der Leiterstäbe 12 liegen. Andererseits kann das kondensatorseitige Ende der Wärmerohre 30 auch im Bereich des Kurzschlussrings 38 liegen. In beiden Fällen wird eine Rückkühlung der Wärmerohre 30 an deren kondensatorseitigem Ende unterstützt, beispielsweise durch Kühl-Lamellen als Luft-Wärmetauscher oder eine andere Art von Wärmetauscher. Eine entsprechende Ausgestaltung ist in Figur 8 dargestellt.

Figur 8 zeigt einen Ausschnitt der Stirnseite 13 des Elektromotors 10. Dabei ist teilweise der Stator/Rotor-Block 8 dargestellt sowie die aus diesem herausragenden Leiterstäbe 12, die im Kurzschlussring 38 enden. Die Leiterstäbe 12 beinhalten Wärmerohre 30, deren kondensatorseitiges Ende im Bereich des Kurzschlussrings 38 liegt. Der Kurzschlussring 38 selbst ist in der Ausführungsform der Figur 9 durch beabstandete Einzelbleche 39 gebildet.

In alternativen Ausgestaltungen, die in Figur 9 nicht dargestellt sind, kann der Kurzschlussring 38 auch aus axial zusammengesetzten Einzelblechen gebildet sein oder einfach ein massiver Ring sein. Er ist vorzugsweise durch denjenigen Hochdruckvorgang mit den Leiterstäben kontaktiert, mit dem auch die Hohlleiter in dem Ständer-Blechpaket fixiert sind.

In einer Ausgestaltung mit beabstandeten Einzelblechen 39, wie in Figur 8 dargestellt, weist der Kurzschlussring 38 eine deutlich vergrößerte Oberfläche gegenüber einem massiven Kurzschlussring auf. Diese Oberfläche dient als Wärmesenke für die Wärmerohre 30 in den Leiterstäben 12. Weiterhin kann diese Ausgestaltung auch für die Vermeidung von Wirbelströmen vorteilhaft sein. Durch einen radial innerhalb dieses Kurzschlussrings 38 des Stators 11 an der Motorwelle 7 angeordneten Lüfter 41 wird ein radialer Kühlluftstrom erzeugt. Dieser tritt durch die Zwischenräume zwischen den Einzelblechen 39 und sorgt für einen verbesserten Wärmeabtransport aus dem Kurzschlussring 38.

Die Kühlung des Kurzschlussrings 38 kann offen sein (Wärmetausch mit der Umgebungsluft, beispielsweise über Luftschlitze im Ständer), oder als geschlossener Kühlkreislauf mit Sekundärkühleinrichtung. Hierzu können beispielsweise mit Luft-Luft-Kühlaggregate via Röhren- oder Plattenkühler oder Luft-Flüssigkeits-Kühlaggregate via Mantel- oder Aufsatzkühler verwendet werden.

### Bezugszeichenliste

- 7: Motorwelle
- 8: Stator/Rotor-Block
- 9: Motorachse
- 10: Elektromotor
- 11: Stator
- 12: Leiterstab
- 13: Stirnseite
- 14: Rückseite
- 15: Leiterplatte
- 16: Kühlplatte
- 17: Schuh
- 18: Verbindungselement
- 20: Fluidkanal
- 23: Schlauchanschluss
- 24: Schlauch
- 25, 28: Hülse
- 26: Aussparung
- 27: Gewindestab
- 38: Kurzschlussring
- 30: Wärmerohr
- 31: verdampferseitiges Ende
- 32: kondensatorseitiges Ende
- 39: Blech
- 41: Lüfter
- 421: Kontaktstellen
- 422: Halbleiterschalter

## Patentansprüche

1. Elektromotor (10) mit:
- einem Stator (11) mit einer Mehrzahl von als Stab ausgestalteten Feldleitern (12),
- einem Wechselrichter mit einem oder mehreren parallelen Leistungsteilen für jeden der Feldleiter (12) zu deren Ansteuerung, wobei der Wechselrichter eine Steuerung zur Erzeugung von Ansteuersignalen für die Leistungsteile umfasst, wobei
- die Endstufen des Wechselrichters auf einer Mehrzahl von Leiterplatten (15) angeordnet sind,
- die Leiterplatten (15) auf wenigstens einer Kühlplatte (16) angeordnet sind,
- die Kühlplatte (16) so angeordnet ist, dass die Feldleiter (12) oder an den Feldleitern (12) angeordnete sie axial verlängernde Stromleiter (18) mit der Kühlplatte in mechanischer Wirkverbindung stehen,
- wenigstens eine Kühlvorrichtung vorhanden ist, die eine Fluidleitung (20) umfasst, die wenigstens abschnittsweise innerhalb von einem der Feldleiter (12) und/oder Stromleiter (18) geführt ist.

2. Elektromotor (10) nach Anspruch 1, bei dem für jeden der Feldleiter (12) und/oder Stromleiter (18) eine Fluidleitung (20) vorhanden ist und wenigstens abschnittsweise innerhalb des Feldleiters (12) und/oder Stromleiters (18) geführt ist.

3. Elektromotor (10) nach einem der vorangehenden Ansprüche, bei dem ein Bereich (19), in dem die Fluidleitung (20) in dem Feldleiter (12) und/oder Stromleiter (18) geführt ist, axial zwischen einer Kühlplatte (16) und einem axialen Beginn des Stator/Rotor-Blocks (8) liegt.

4. Elektromotor (10) nach einem der vorangehenden Ansprüche, der einen Kurzschlussring (38) auf der von den Kühlplatten (16) abgewandten Seite des Elektromotors (10) zur elektrischen Verbindung der Feldleiter (12) aufweist und bei dem die Fluidleitungen (20) für wenigstens zwei der Feldleiter (12) im Kurzschlussring miteinander verbunden sind.

5. Elektromotor (10) nach Anspruch 4, bei dem die Fluidleitungen (20) für wenigstens zwei der Feldleiter (12) an einer vom Kurzschlussring (38) abgewandten Seite des Elektromotors miteinander verbunden sind.

6. Elektromotor (10) nach einem der vorangehenden Ansprüche, bei dem die Fluidleitung (20) teilweise durch eine Gewindestange (27) gebildet ist, die in ein Ende eines Feldleiters (12) eingeschraubt ist, wobei die Fluidleitung (20) im Feldleiter (12) fortgesetzt ist.

7. Elektromotor (10) nach Anspruch 6, bei dem eine oder mehrere Kühlplatten (16) im Wechsel mit Elementen zur axialen Positionierung, insbesondere Abstandshülsen, (25, 28) auf die Gewindestange (27) aufgeschoben sind.

8. Elektromotor (10) nach einem der vorangehenden Ansprüche, bei dem die Fluidleitung (20) ein metallisches Material aufweist, insbesondere aus einem metallischen Material besteht.

9. Elektromotor (10) nach einem der vorangehenden Ansprüche, bei dem die Fluidleitung (20) durch eine Aushöhlung oder Bohrung im Feldleiter (12) und/oder Stromleiter (18) gebildet ist.

10. Elektromotor (10) nach einem der vorangehenden Ansprüche, bei dem die Fluidleitung (20) ein Wärmerohr (30) ist und vollständig innerhalb eines der Feldleiter (12) und/oder Stromleiter (18) und/oder einem an den Feldleiter (12) anschließenden Kurzschlussring (38) angeordnet ist.

11. Elektromotor (10) nach Anspruch 10, bei dem ein kondensatorseitiges Ende des Wärmerohrs (30) im Kurzschlussring (38) angeordnet ist und der Kurzschlussring (38) aus beabstandeten Blechen gebildet ist.

12. Elektromotor (10) nach einem der vorangehenden Ansprüche, bei dem die Leiterplatten (15) kreis- oder ringsektorförmig ausgestaltet sind.

13. Elektromotor (10) nach einem der vorangehenden Ansprüche, bei dem die Kühlplatte (16) senkrecht zur Achse (9) des Elektromotors (10) angeordnet ist.

14. Elektromotor (10) nach einem der vorangehenden Ansprüche, ausgestaltet, jeden der Feldleiter (12) mit einer eigenen Phase anzusteuern.

15. Elektromotor (10) nach einem der vorangehenden Ansprüche, bei der die Wechselrichter ausgestaltet sind zur Erzeugung einer Wechselspannung mit einer Amplitude von 200 V oder weniger, insbesondere 150 V oder weniger, insbesondere 50 V oder weniger.
